# EUROPÄISCHE PATENTSCHRIFT

(11) **EP 0 815 443 B1**
(45) Veröffentlichungstag und Bekanntmachung des Hinweises auf die Patenterteilung: **21.11.2001**
(21) Anmeldenummer: 96905869.2
(22) Anmeldetag: 07.03.1996
(51) Int. Cl.: G01N 30/93

(54) **TRENNMITTEL FÜR DIE DC-FTIR-KOPPLUNG**
SEPARATING MATERIAL USED IN COMBINED THIN-LAYER CHROMATOGRAPHY AND FTIR SPECTROSCOPY
MATERIAU DE SEPARATION UTILISE POUR UN SYSTEME COMBINANT CHROMATOGRAPHIE EN COUCHE MINCE ET SPECTROSCOPIE INFRAROUGE A TRANSFORMEE DE FOURIER

(30) Priorität: 18.03.1995 DE 19509949
(43) Veröffentlichungstag der Anmeldung: 07.01.1998
(73) Patentinhaber: MERCK PATENT GmbH, 64293 Darmstadt (DE)
(72) Erfinder: KOVAR, Karl-Artur, D-72076 Tübingen (DE); FISCHER, Walter, D-64347 Griesheim (DE); HAUCK, Heinz, Emil, D-64823 Gross-Umstadt (DE)
(86) Internationale Anmeldenummer: EP9600965
(87) Internationale Veröffentlichungsnummer: WO9629596

(56) Entgegenhaltungen:
- DE-A- 1 943 304
- FR-A- 2 444 487
- ANALYTICAL CHEMISTRY, Bd. 66, Nr. 13, 1.Juli 1994, COLUMBUS US, Seiten 1937-1940, XP000455137 S.P. BOUFFARD ET AL.: "development of microchannel thin-layer chromatography with infrared microspectroscopic detection"
- APPLIED SPECTROSCOPY REVIEWS, Bd. 27, Nr. 2, 1.Juni 1992, Seiten 125-141, XP000321843 MUSTILLO D M ET AL: "THE DEVELOPMENT AND ROLE OF NEAR-INFRARED DETECTION IN THIN-LAYER CHROMATOGRAPHY"
- APPLIED SPECTROSCOPY, Bd. 45, Nr. 2, 1.Februar 1991, Seiten 253-259, XP000175851 YAMAMOTO H ET AL: "SAMPLE TRANSFER TECHNIQUE FOR THIN-LAYER CHROMATOGRAPHY/FOURIER TRANSFORM INFRARED SPECTROMETRY"

## Beschreibung

Die Erfindung betrifft Trennmittel für die Dünnschichtchromatographie (DC), die sich insbesondere für in situ Infrarot-Spektroskopie (IR) und Fourier-Transformations-Infrarot-Spektroskopie (FTIR) eignen.

Die Kopplung der DC mit der Infrarotspektroskopie ist bereits seit längerer Zeit Gegenstand der Forschung mit dem Ziel, die leistungsfähige und ökonomische Trennmethode DC mit der anerkannt aussagekräftigen Spektroskopiemethode IR zu kombinieren (Percival C.J., Griffiths P.R. (1975), Anal. Chem., **45** (1), S. 154-156). Trotz des hohen Aufwandes bei der Herstellung spezieller Schichten (z.B. Silberchlorid als Träger mit einem Zusatz des perfluorierten Kohlenwasserstoffs Fluorolube zur Streuungsverminderung) blieb die Nachweisgrenze und Empfindlichkeit unzureichend. Außerdem konnte der für analytische Zwecke wichtige unter der Bezeichnung "Fingerprintbereich" bekannte Spektralbereich bei der Verwendung von Kieselgel als stationärer Phase wegen der Eigenabsorption des Kieselgels nicht benutzt werden.

Kieselgel gehört aufgrund seiner Silanol- und Siloxangruppen zu den stark absorbierenden Materialien. Bei der Reflexionsspektroskopie an solchen stark absorbierenden Stoffen kommt es zu einem anomalen Verlauf der Dispersionskurve. Dabei wird die einfallende Strahlung zum größten Teil gerichtet reflektiert. Dies führt zu sogenannten "Reststrahlen", die keine spektrale Information mehr enthalten. Weitere Schwierigkeiten ergeben sich aus der Tatsache, daß die effektive Eindringtiefe in der Nähe von Absorptionsbanden der Matrix viel kleiner ist als in spektralen Bereichen ohne Matrixabsorption. Statt Kieselgel wurde daher von Danielson et al. (1992) Analyt.Chem. **64**, 2183 - 2186, Zirkoniumoxid als Sorbens eingesetzt. Die Messung von FTIR-Spektren von Substanzen, die auf diesem Sorbens adsorbiert waren, war zwar möglich, jedoch ließen sich viele Substanzen, die ohne weiteres auf Kieselgel aufgetrennt werden können, auf Zirkoniumoxid nicht trennen, da sie entweder in der Startzone verblieben oder mit der Lösungsmittelfront wanderten. D.h. der analytisch wichtige Bereich von R_{f}-Werten zwischen 0,2 und 0,8 ließ sich nicht erreichen.

DE 19 43 304 offenbart chromatographische Trennmedien aus reinen Metalloxiden, die durch Aufdampfen von Metallen auf einen Träger und anschließende Oxidation des Metallfilms hergestellt werden.

Im Wellenzahlbereich zwischen 1350 und 1000 tritt durch die starke Eigenabsorption des Kieselgels in diesem Bereich eine intensive Störbande auf, die die DRIFT-Spektren (diffuse reflectance infrared Fourier transform; Reflexionsspektren im mittleren Infrarotbereich) von adsorbierten Substanzen überlagert. Dadurch können wesentliche Teile des "Fingerprint-bereiches" nicht mehr erfaßt werden. Erste DRIFT-Messungen auf Kieselgelschichten wurden von Fuller und Griffiths durchgeführt (Fuller M.P., Griffiths P.R. (1978), Anal. Chem., **50** (13), S. 1906-1910; und Fuller M.P., Griffiths P.R. (1980) Appl. Spectrosc., **1980** (34), S. 533-539). Dabei konnten Spektren von Methylenblau mit 1,2 µg Substanz gemessen werden.

Im Hinblick auf die Vielseitigkeit der Anwendungsmöglichkeiten insbesondere von Kieselgel 60 (60 Angström Porengröße) als Sorbens in der DC und HPTLC und dem gerade für diese stationäre Phase erreichten Qualitätsstandard besteht ein Bedarf, geeignete Fertigschichten auf Kieselgel-Basis zur Kopplung mit der IR-Spektroskopie zu entwickeln. Aufgabe der Erfindung ist es, Trennmaterialien für die Dünnschichtchromatographie bereitzustellen, die eine in situ Untersuchung mittels FTIR - Spektroskopie auch mit geringen Mengen an Probenmaterial erlauben. Diese Aufgabe wird durch die Bereitstellung von Trennmaterialien für die Dünnschichtchromatographie gelöst, deren Sorbensschicht einen Zusatz eines Reflexionsverstärkers enthält.

Gegenstand der Erfindung sind Trennmaterialien für die Dünnschichtchromatographie, die für die Auswertung mittels in situ Infrarot-Spektroskopie oder Fourier-Transformations-Infrarot-Spektroskopie geeignet ist, umfassend eine aus Sorbensteilchen gebildete Sorbensschicht auf einem Träger, wobei die Sorbensschicht einen Zusatz von 10 bis 90 Gewichtsprozent bezogen auf die Sorbensmenge eines Reflexionsverstärkers, bevorzugterweise Magnesiumwolframat und/oder Bi₂O₃ enthält. In bevorzugten Ausführungsformen beträgt die Partikelgröße des Reflexionsverstärkers 3 - 5 µm und die Menge des Reflexionsverstärkers das 0,6- bis 1,5-fache der Menge an Sorbens. SiO₂-haltige Sorbensteilchen werden erfindungsgemäß verwendet.

Gegenstand der Erfindung ist weiterhin die Verwendung dieses Trennmaterials für Trennverfahren mit anschließender in situ Messung eines FTIR-Spektrums.

Erfindungsgemäß geeignete Reflexionsverstärker weisen ein gutes Reflexionsvermögen im IR auf. Derartige Materialien sind grundsätzlich bekannt. Dazu gehören Metalle, soweit sie gegenüber den in der Dünnschichtchromatographie üblichen Elutionsmitteln beständig sind, und sauerstoffhaltige Metallverbindungen. Insbesondere sind Magnesiumwolframat und Bi₂O₃ erfindungsgemäß als Reflexionsverstärker bevorzugt. Erfindungsgemäß können auch mehrere Substanzen gemischt als Reflexionsverstärker zugesetzt werden. Dazu gehören auch Verbindungen, z.B. Magnesiumwolframat, die in geringen Mengen (etwa 2 Gewichtsprozent) als Fluoreszenzindikator den bekannten Sorbensschichten zugefügt wurden. Erfindungsgemäß beträgt der Gehalt an Reflexionsverstärker jedoch mehr als 10 Gewichtsprozent bezogen auf die Sorbensmenge.

Durch den erfindungsgemäßen Zusatz eines Reflexionsverstärkers zu der Sorbensschicht aus Kieselgel bleiben die guten chromatographischen Eigenschaften des Sorbens erhalten; trotzdem wird das Signal-Rausch-Verhältnis (z.B. bei der Aufnahme eines Gram-Schmidt-Chromatogramms, bei dem über den gesamten IR-Spektralbereich summiert wird) und die Qualität der DRIFT-Spektren verbessert. Diese Verbesserung der IR-spektroskopischen Eigenschaften zeigt sich beispielsweise auch durch den Wegfall der Störbande bei der Wellenzahl 1337.

Die Korngröße und -verteilung der erfindungsgemäß verwendeten Reflexionsverstärker liegt in der gleichen Größenordnung wie die in der DC, beziehungsweise HPTLC verwendeten Sorbenspartikel. Vorzugsweise liegt die Korngröße der Reflexionsverstärker im Bereich von ca. 2 - 20 µm, insbesondere von ca. 3 - 5 µm.

Der Mengenanteil des Reflexionsverstärkers in der Sorbensschicht beträgt mehr als 10 Gewichtsprozent, bevorzugterweise das 0,1- bis 9-fache, besonders bevorzugt das 0,6- bis 1,5-fache, der Sorbensmenge.

Als Sorbens kommen die in der Dünnschichtchromatographie üblichen Sorbenzien, insbesondere Kieselgel und derivatisierte Kieselgele in Betracht. Derivatisierte Sorbenzien sind dem Fachmann in großer Zahl bekannt und in gängigen Druckschriften genannt. Dazu gehören insbesondere die hydrophoben als C₂, C₈ und C₁₈ bekannten reversed phase Materialien und hydrophile mit Amino-, Cyano- oder Diolgruppen modifizierte Materialien.

Als weiteren Zusatz kann die Sorbensschicht auch in der Dünnschichtchromatographie übliche Fluoreszenzindikatoren enthalten. Sorbenzien und Fluoreszenzindikatoren sind dem Fachmann bekannt.

Normalerweise enthalten Trennmaterialien für die Dünnschichtchromatographie zusätzlich Binder. Prinzipiell geeignete Binder, sowie deren Anteile in der Sorbensschicht sind dem Fachmann bekannt. Soweit Binder für die erfindungsgemäßen Trennmaterialien benutzt werden, werden insbesondere Poly(meth)acrylsäure und -acrylate bevorzugt. Besonders bevorzugte Binder besitzen mittlere Molekulargewichte von 3-4 Millionen und sind kommerziell erhältlich.

Die Sorbensteilchen der erfindungsgemäßen Trennmaterialien können sowohl unregelmäßig als auch regelmäßig geformt, insbesondere auch sphärisch sein.

Als Träger für die Trennschicht können die in der DC oder HPTLC üblichen Glasplatten oder Folien, aber auch oberflächenbehandelte Träger, z.B. angerauhte, verspiegelte und/oder mit Metallen bedampfte Träger verwendet werden.

Die Schichtdicke der Sorbensschicht der erfindungsgemäßen Trennmaterialien entspricht den in der DC, beziehungsweise HPTLC üblichen Schichtdicken. Schichtdicken zwischen 30 und 250 µm, insbesondere zwischen 50 und 140 µm, sind erfindungsgemäß bevorzugt.

Abbildung 1 zeigt Gram-Schmidt-Chromatogramme von Phenazon, Coffein und Paracetamol auf einer erfindungsgemäßen Sorbensschicht enthaltend 50 Gewichts-% Bi₂O₃ im Vergleich zu einer Schicht ohne Reflexionsverstärker.
Abbildung 2 zeigt das in situ aufgenommene DRIFT-Spektrum von Coffein auf einer erfindungsgemäßen Sorbensschicht enthaltend 50 Gewichts-% Bi₂O₃ im Vergleich zu einer Schicht ohne Reflexionsverstärker.

Einzelheiten zu beiden Abbildungen finden sich in Beispiel 2.

FTIR-Spektrometer sind kommerziell erhältlich. Für die in situ Messung von Proben, die durch Dünnschichtchromatographie getrennt wurden, dient typischerweise eine externe DC-/HPTLC-DRIFT-Einheit. Derartige Einheiten sind ebenfalls kommerziell erhältlich; beispielsweise wird bei feststehendem Meßstrahl der Dünnschichtträger auf einem X-Y-Kreuztisch mittels Schrittmotoren bewegt. Die Meßanordnung wird typischerweise mit getrockneter, CO₂-freier Luft gespült. Die Steuerung der Bewegung und der Datenerfassung, sowie die Verarbeitung der Meßdaten werden durch einen Rechner ausgeführt. Dabei können gegebenenfalls Hintergrundspektren an einer leeren Stelle der Dünnschichtplatte ausgemessen und bei der Datenverarbeitung abgezogen werden. Geeignete Rechner, sowie Kontroll- und Auswerteprogramme sind kommerziell erhältlich.

### Beispiele

Die folgenden Beispiele sollen den Gegenstand der Erfindung erläutern und bedeuten keine Einschränkung des Erfindungsgedankens.

### Beispiel 1: Herstellung einer HPTLC-Platte auf Kieselgel 60-Basis für die FTIR-Kopplung

a) Herstellung der Suspension
   Zu 320 mL Wasser werden 2,0 g einer hochmolekularen Acrylsäure (mittleres Molekulargewicht 4 x 10⁶) gegeben und 15 min bei ca. 1200 U/min eingerührt. Zu der Lösung werden 50 g eines für die HPTLC üblichen Kieselgels 60 (mittlere Teilchengröße ca. 5 µm; Korngrößenverteilung 4 - 8 µm), 50 g eines Bi₂O₃-Pulvers (mittlere Teilchengröße ca. 4 µm) und 2,0 g Mg-wolframat (mittlere Teilchengröße ca. 3 µm) zugegeben und weitere 15 min bei ca. 1200 U/min gerührt. Anschließend wird die Suspension mit 0,1 N Natronlauge auf einen pH-Wert von 6,3 eingestellt und dann noch 1 h bei ca. 1200 U/min weitergerührt.
b) Beschichtung der Glasplatten
   Glasplatten des Formats 20x20 cm (Glasstärke 1,25 mm) werden mit der vorbereiteten Suspension wie folgt beschichtet:
   Ein Desaga-Streichgerät wird mit der Suspension gefüllt und bei einer Rakel-Einstellung von ca. 0,25 mm über die Glasplatten geführt.
c) Trocknung
   Die beschichteten Glasplatten werden in einem Trockenschrank bei ca. 110°C für 30 min getrocknet. Die resultierende Schichtdicke liegt bei ca. 100 µm.

### Beispiel 2: Substanztrennung und anschließende FTIR-Kopplung

a) Substanztrennung:
   5 µL einer jeweils 0,02%igen Lösung von Coffein, Paracetamol und
   Phenazon in Dichlormethan werden bandförmig (Bandlänge 3 mm) auf die Platte aufgesprüht (mit Linomat IV der Fa. CAMAG). Nach der Trocknung wird die Platte in einer Normalkammer ohne Kammersättigung mit dem Fließmittel Ethylacetat/Methanol 20/1 (v/v) auf eine Laufstrecke von 4 cm entwickelt und anschließend getrocknet.
b) Spektren-Aufnahme
   Die Messungen werden mit einem IFS48 FTIR-Spektrometer und der externen DRIFT-Einheit der Fa. Bruker vorgenommen. Die Auswertung erfolgt über die Spektrometersoftware OPUS Vers. 4.17 A.

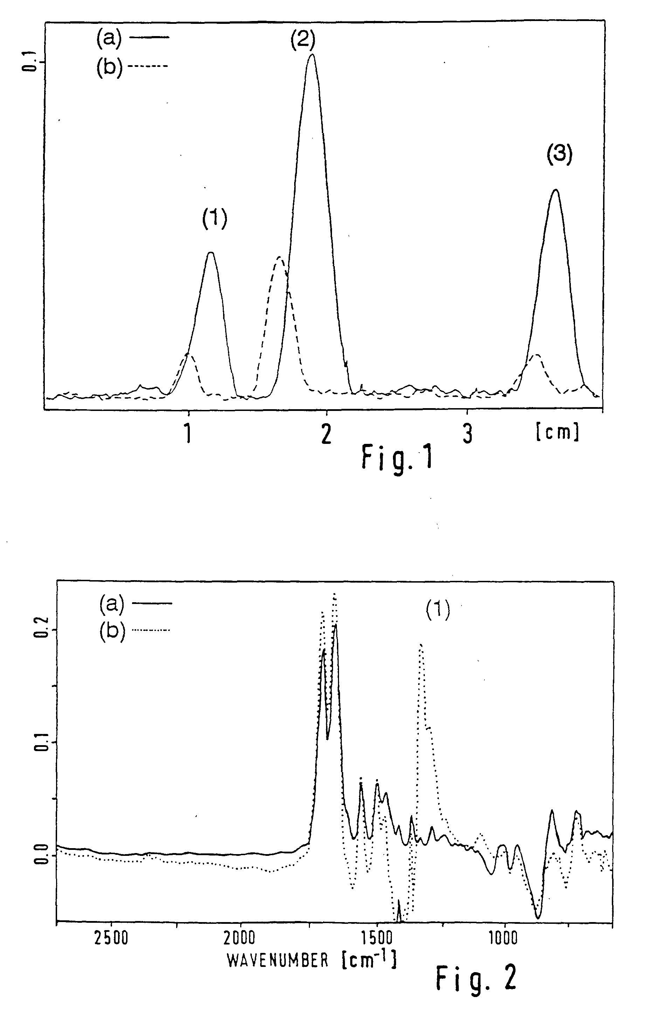

Die Ergebnisse sind in den Abbildungen 1 und 2 zusammengefaßt:
Abbildung 1 zeigt Gram-Schmidt-Chromatogramme von Phenazon (1), Coffein (2) und Paracetamol (3) auf einer erfindungsgemäßen Sorbensschicht enthaltend 50 Gewichts-% Bi₂O₃ (ausgezogene Linie) im Vergleich zu einer Schicht ohne Reflexionsverstärker (unterbrochene Linie).
Abbildung 2 zeigt das in situ aufgenommene DRIFT-Spektrum von Coffein auf einer erfindungsgemäßen Sorbensschicht enthaltend 50 Gewichts-% Bi₂O₃ (ausgezogene Linie) im Vergleich zu einer Schicht ohne Reflexionsverstärker (unterbrochene Linie). Mit (1) ist die Lage der Störbande bei der Wellenzahl 1337 cm⁻¹ markiert, die nur im Vergleichsspektrum auftritt.

## Patentansprüche

1. Trennmaterial für die Dünnschichtchromatographie, das für die Auswertung mittels in situ Infrarot-Spektroskopie oder Fourier-Transformations-Infrarot-Spektroskopie geeignet ist, enthaltend eine aus Sorbensteilchen auf Basis von SiO₂ oder derivatisiertem SiO₂ gebildete Sorbensschicht auf einem Träger, **gekennzeichnet durch** einen Zusatz von 10 bis 90 Gewichtsprozent, bezogen auf die Sorbensmenge, eines Reflexionsverstärkers in der Sorbensschicht.

2. Trennmaterial nach Anspruch 1, **dadurch gekennzeichnet, daß** als Reflexionsverstärker Magnesiumwolframat und/oder Bi₂O₃ enthalten sind.

3. Trennmaterial nach einem der Ansprüche 1 - 2, **dadurch gekennzeichnet, daß** die Partikelgröße des Reflexionsverstärkers 2 - 20 µm beträgt.

4. Trennmaterial nach einem der Ansprüche 1 - 3, **dadurch gekennzeichnet, daß** die Oberfläche der Sorbensteilchen modifiziert ist.

5. Trennmaterial nach einem der Ansprüche 1 - 4, **gekennzeichnet durch** den Zusatz eines hochmolekularen Acryl- und/oder Methacrylsäurepolymers.

6. Trennmaterial nach einem der Ansprüche 1 - 5, **dadurch gekennzeichnet, daß** die Dicke der Sorbensschicht zwischen 30 und 250 µm beträgt.

7. Verwendung eines Trennmaterials nach einem der Ansprüche 1 - 6 für Trennverfahren mit anschließender in situ Messung eines FTIR-Spektrums.

## Claims

1. A separating material for thin-layer chromatography that is suitable for evaluation by in situ infrared spectroscopy or Fourier transform infrared spectroscopy and contains, on a support, a sorbent layer formed of sorbent particles based on SiO₂ or derivatized SiO₂, **characterized by** the presence in the sorbent layer of 10 to 90 per cent by weight, based on the sorbent quantity, of a reflection enhancer.

2. A separating material according to Claim 1, **characterized in that** the reflection enhancer is magnesium tungstate and/or Bi₂O₃.

3. A separating material according to either of Claims 1 - 2, **characterized in that** the particle size of the reflection enhancer is 2 - 20 µm.

4. A separating material according to any of Claims 1 - 3, **characterized in that** the surface of the sorbent particles has been modified.

5. A separating material according to any of Claims 1 - 4, **characterized by** the inclusion of a high molecular weight acrylic and/or methacrylic acid polymer.

6. A separating material according to any of Claims 1 - 5, **characterized in that** the thickness of the sorbent layer is between 30 and 250 µm.

7. The use of a separating material according to any of Claims 1 - 6 for separation processes with subsequent in situ measurement of an FTIR spectrum.

## Revendications

1. Matériau de séparation pour la chromatographie en couche mince, lequel matériau de séparation est approprié pour l'exploitation à l'aide d'une spectroscopie infrarouge in situ ou d'une spectroscopie infrarouge à transformée de Fourier, lequel matériau de séparation contient une couche de sorbant formée sur un support et constituée à partir de particules de sorbant à base de dioxyde de silicium (SiO₂) ou de dioxyde de silicium (SiO₂) dérivé,
**caractérisé par** un apport supplémentaire d'un renforçateur de réflexion dans la couche de sorbant, cet apport étant compris entre 10 pour cent et 90 pour cent en poids par rapport à la quantité de sorbant.

2. Matériau de séparation selon la revendication 1, **caractérisé en ce que** les éléments contenus en tant que renforçateur de réflexion sont du tungstate de magnésium et/ou du sesquioxyde de bismuth (Bi₂O₃).

3. Matériau de séparation selon l'une ou l'autre des revendications 1 et 2, **caractérisé en ce que** la taille des particules du renforçateur de réflexion est comprise entre 2 *µ*m et 20 *µ*m.

4. Matériau de séparation selon l'une quelconque des revendications 1 à 3, **caractérisé en ce que** la surface des particules du sorbant est modifiée.

5. Matériau de séparation selon l'une quelconque des revendications 1 à 4, **caractérisé par** l'apport supplémentaire d'un polymère d'acide acrylique et/ou d'acide méthacrylique de masse moléculaire élevée.

6. Matériau de séparation selon l'une quelconque des revendications 1 à 5, **caractérisé en ce que** l'épaisseur de la couche du sorbant est comprise entre 30 *µ*m et 250 *µ*m.

7. Utilisation d'un matériau de séparation selon l'une quelconque des revendications 1 à 6, pour un procédé de séparation réalisé en effectuant ensuite une mesure in situ d'un spectre infrarouge à transformée de Fourier (FTIR).
